# EUROPÄISCHE PATENTANMELDUNG

(11) **EP 4 116 692 A1**
(43) Veröffentlichungstag der Anmeldung: **11.01.2023**
(21) Anmeldenummer: 21184638.1
(22) Anmeldetag: 09.07.2021
(51) Int. Cl.: G01N 1/22, G01N 1/28, G01N 15/14, G01N 15/00

(54) **VORRICHTUNG UND VERFAHREN ZUR ANALYSE EINER GASFÖRMIGEN PROBE, SOWIE RAMAN-SPEKTROMETER**

(71) Anmelder: Hilti Aktiengesellschaft, 9494 Schaan (LI)
(72) Erfinder: Krämer, Stefan, 86161 Augsburg (DE)
(74) Vertreter: Hilti Aktiengesellschaft Corporate Intellectual Property

(57) **Zusammenfassung**

Die Erfindung betrifft eine Vorrichtung zur Analyse einer gasförmigen Probe in Bezug auf eine Zusammensetzung der in der Probe enthaltenen Partikel, wobei die Vorrichtung folgende Komponenten umfasst: eine Vorrichtung zum Ansaugen der gasförmigen Probe, eine Vorrichtung zur Trennung der in der gasförmigen Probe enthaltenen Partikel in Abhängigkeit von einem Durchmesser der Partikel, eine Vorrichtung zum Sammeln der Partikel, eine Sensor-Vorrichtung zur Analyse der in der gasförmigen Probe enthaltenen Partikel und eine Vorrichtung zur Auswertung von Spektren. Die Sensor-Vorrichtung arbeitet basierend auf Raman-Streuung und ist dazu eingerichtet ist, die auszuwertenden Spektren zu erzeugen. Die Auswertung kann insbesondere durch einen Vergleich der erzeugten Spektren mit Referenz-Spektren erfolgen, wobei diese Referenz-Spektren insbesondere unterschiedliche Daseins-Formen von Silizium-Dioxid beschreiben können. In weiteren Aspekten betrifft die Erfindung ein Verfahren zur Analyse einer gasfömigen Probe in Bezug auf eine Zusammensetzung der in der Probe enthaltenen Partikel, sowie ein Raman-Spektrometer, das Bestandteil einer vorgeschlagenen Vorrichtung sein kann.

## Beschreibung

Die Erfindung betrifft eine Vorrichtung zur Analyse einer gasförmigen Probe in Bezug auf eine Zusammensetzung der in der Probe enthaltenen Partikel, wobei die Vorrichtung folgende Komponenten umfasst: eine Vorrichtung zum Ansaugen der gasförmigen Probe, eine Vorrichtung zur Trennung der in der gasförmigen Probe enthaltenen Partikel in Abhängigkeit von einem Durchmesser der Partikel, eine Vorrichtung zum Sammeln der Partikel, eine Sensor-Vorrichtung zur Analyse der in der gasförmigen Probe enthaltenen Partikel und eine Vorrichtung zur Auswertung von Spektren. Die Sensor-Vorrichtung arbeitet basierend auf Raman-Streuung und ist dazu eingerichtet ist, die auszuwertenden Spektren zu erzeugen. Die Auswertung kann insbesondere durch einen Vergleich der erzeugten Spektren mit Referenz-Spektren erfolgen, wobei diese Referenz-Spektren unterschiedliche Daseins-Formen von Silizium-Dioxid beschreiben können. In weiteren Aspekten betrifft die Erfindung ein Verfahren zur Analyse einer gasförmigen Probe in Bezug auf eine Zusammensetzung der in der Probe enthaltenen Partikel, sowie ein Raman-Spektrometer.

### Hintergrund der Erfindung:

In den letzten Jahren hat im Baugewerbe eine Fokussierung auf den Gesundheitsschutz der Arbeiter stattgefunden. In diesem Zusammenhang wurde eine Vielzahl von Regelungen und Bestimmungen erlassen, um Arbeiter auf Baustellen besser vor gesundheitlichen Beeinträchtigen, die bei der Arbeit auf dem Bau auftreten können, zu schützen. Ein Schwerpunkt dieser Regelungen lag auf dem Schutz der Arbeit vor Staub und darin enthaltenen Stoffen, die als gesundheitlich bedenklich oder gefährlich eingestuft werden. Ein solcher möglicherweise gesundheitsschädlicher Stoff ist Quarz. Der Quarz-Anteil in einem zu vermessenden Staub stellt eine wichtige Information dar, weil Quarz mit Krankheiten, wie Silikose oder Lungenkrebs, in Verbindung gebracht wird. Da in vielen Ländern die Bestrebungen zunehmen, Arbeiter im Bergbau oder auf Baustellen besser als zuvor vor hohen Staubbelastungen und den damit verbundenen negativen Gesundheitsfolgen zu schützen, besteht ein hohes Interesse an praktikablen, realitätstauglichen und kostengünstigen technischen Lösungen zur Untersuchung von Staub. Dabei würde es die Fachwelt insbesondere begrüßen, wenn eine Möglichkeit geschaffen werden könnte, einen Quarz-Anteil in einem zu vermessenden Staub schnell und zuverlässig bestimmen zu können, um geeignete Schutzmaßnahmen für die betroffenen Arbeiter ergreifen zu können.

Wünschenswert wäre es daher, wenn eine Vorrichtung als "Staub-Dosimeter", das von den Arbeitern auf einer Baustelle mitgeführt werden kann und welches im Laufe des Tages die Menge an Quarz bestimmt, der der Bauarbeiter ausgesetzt ist, bereitgestellt werden könnte.

Allerdings sind im Stand der Technik keine befriedigenden Lösungen bekannt, mit denen eine solche "Live-Messung" des Quarz-Feinstaub-Gehalts in der Umgebungsluft durchgeführt werden kann, d.h. mit denen der Quarz-Feinstaub-Gehalt in der Umgebungsluft kontinuierlich überwacht werden kann. Vielmehr werden stattdessen Partikelsensoren, wie sie aus US 8 009 290 B1 und DE 20 2019 102 221 U1 bekannt sind, verwendet, um Untersuchungen der Umgebungsluft durchzuführen. Solche Partikelsensoren sind aber häufig nicht in der Lage, die detektierten Partikel stofflich zu unterscheiden. Mit anderen Worten ist es oft nicht möglich, unter Verwendung der bekannten Partikelsensoren zu entscheiden, welchem Material, welchem chemischen Stoff bzw. Element oder welcher chemischen Verbindung eine Gruppe von Partikeln zuzuordnen ist. Aufgrund dieser fehlenden Auswertemöglichkeit ist es auch nicht möglich, Aussagen über die gesundheitliche Bedenklichkeit der in der Umgebungsluft enthaltenen Partikel zu machen.

Zwar ist im Stand der Technik bekannt, dass detektierte Partikel nach ihrem geometrischen Durchmesser, d.h. ihrer "Größe" sortiert und unterschieden werden können. Allerdings ist diese Analyse mit dem strukturellen Fehler behaftet, dass für den Gesundheitsschutz nicht der geometrische Durchmesser eines Partikels die aussagekräftige Größe ist, sondern der sog. aerodynamische Durchmesser. Der aerodynamische Durchmesser ist im Sinne der Erfindung definiert als der Durchmesser eines im Wesentlichen kugelförmigen Partikels mit der Dichte 1 g/cm³, der im Wesentlichen dieselbe Sinkgeschwindigkeit aufweist wie ein zu betrachtender Partikel. Wenn beispielsweise in einem Gesetzes- oder Verordnungstext ein aerodynamischer Durchmesser von 10 µm als gefährlich einstuft wird, so sind für Quarz mit einer Dichte von ca. 2,5 g/cm³ Partikel mit einem geometrischen Durchmesser von ca. 4 µm und kleiner gefährlich. Eine solche Umrechnung kann zwar auch mit den Daten, die von konventionellen Partikelsensoren ermittelt werden, durchgeführt werden. Allerdings hat sich gezeigt, dass die Analyse von Luftproben-Datensätzen aufgrund ihrer komplexen Zusammensetzung und aufgrund der erforderlichen Kalibrierungen eine technische Herausforderung darstellt.

Darüber hinaus können konventionelle Partikelsensoren, wie sie aus dem Stand der Technik bekannt sind, häufig nicht in körpergetragene Vorrichtungen integriert werden, weil in kleinen, handlichen körpergetragenen Geräten oft nicht ausreichend Platz für die für die Messung und Analyse der Umgebungsluft-Probe erforderlichen Komponenten solcher Sensoren vorhanden ist.

Im Stand der Technik sind Labormessgeräte oder Bestandteile solcher Aufbauten bekannt, wie zum Beispiel in US 2020 009 560 A1 beschrieben werden. Allerdings ermöglichen auch diese Labormessgeräte häufig keine Live-Messung und -Auswertung von Datensätzen, so dass der Nutzer kein sofortiges Feedback über seine aktuelle Staub-Belastung erhält. Außerdem sind bekannte Labormessgerät oft teuer, aufwändig und kompliziert zu bedienen, so dass nur geschultes Personal die Bedienung übernehmen kann. Dadurch wird allerdings ein Betrieb "im Feld", d.h. beispielsweise auf einer Baustelle, praktisch ausgeschlossen. Ferner fehlt es den bekannten Geräten aus dem Stand der Technik häufig an der nötigen Robustheit gegenüber Erschütterungen, Verschmutzungen usw., um den täglichen Einsatz im Alltag, beispielsweise auf einer Baustelle, zu überstehen.

Ein weiterer Nachteil der aus dem Stand der Technik bekannten Mess-Vorrichtungen zur Untersuchung von Partikeln in der Umgebungsluft besteht darin, dass diese zumeist nicht in der Lage sind, Silizium-Dioxid und seine verschiedenen Kristallmodifikationen, wie Quarz, Cristobalit oder Tridymit, sowie amorphes Silizium-Dioxid zu erkennen bzw. zu unterscheiden. Eine solche Unterscheidung ist insbesondere deswegen relevant, weil die unterschiedlichen Kristallmodifikationen des Silizium-Dioxids bzw. das amorphe Silizium-Dioxid unterschiedlich eingeschätzt werden, was ihr gesundheitliches Gefährdungspotential betrifft.

Aufgabe der vorliegenden Erfindung ist es daher, die vorstehend beschriebenen Mängel und Nachteile des Standes der Technik zu überwinden und eine Vorrichtung und ein Verfahren zur Analyse einer gasförmigen Probe anzugeben, mit denen Live-Messungen im Sinne einer kontinuierlichen Überwachung eines Nutzers möglich sind. Die anzugebende Vorrichtung soll so robust ausgestaltet sein, dass sie in rauher Umgebung, wie beispielsweise auf einer Baustelle, eingesetzt werden kann. Darüber hinaus soll die bereitzustellende Vorrichtung leicht zu bedienen sein, so dass sie von einem Laien verwendet und ihre Anzeigen bzw. angezeigten Ergebnisse verstanden werden können. Insbesondere soll mit der anzugebenden Vorrichtung und dem anzugebenden Verfahren der für den Gesundheitsschutz relevante aerodynamische Durchmesser von Partikeln untersucht und ausgewertet werden können. Die Fachwelt würde es ferner begrüßen, wenn die bereitzustellende Mess-Vorrichtung in der Lage wäre, Silizium-Dioxid, seine verschiedenen Kristallmodifikationen und amorphes Silizium-Dioxid sicher voneinander unterscheiden zu können. Außerdem wäre es wünschenswert, wenn die bereitzustellende Vorrichtung in eine körpergetragene Vorrichtung integriert werden könnte.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird in einem ersten Aspekt gelöst durch eine Vorrichtung zur Analyse einer gasförmigen Probe in Bezug auf eine Zusammensetzung der in der Probe enthaltenen Partikel, wobei die Vorrichtung folgende Komponenten umfasst:
a) Vorrichtung zum Ansaugen der gasförmigen Probe,
b) Vorrichtung zur Trennung der in der gasförmigen Probe enthaltenen Partikel in Abhängigkeit von einem Durchmesser der Partikel,
c) Vorrichtung zum Sammeln der Partikel,
d) Sensor-Vorrichtung zur Analyse der in der gasförmigen Probe enthaltenen Partikel in Abhängigkeit von dem Durchmesser der Partikel, wobei die Sensor-Vorrichtung basierend auf Raman-Streuung arbeitet und dazu eingerichtet ist, Spektren zu erzeugen,
e) Vorrichtung zur Auswertung der Spektren, indem die Spektren von der Vorrichtung zur Auswertung mit Referenz-Spektren verglichen werden.

Die vorgeschlagene Vorrichtung ist vorteilhafterweise dazu eingerichtet, einen Quarz-Feinstaub-Gehalt in einer gasförmigen Probe zu messen, wobei die gasförmige Probe insbesondere die Atemluft eines Nutzers der Vorrichtung umfassen kann. Der Begriff "gasförmig" bedeutet im Sinne der Erfindung bevorzugt, dass es sich um eine gasförmige Probe, wie beispielsweise Luft, handelt, wobei diese Probe verschiedene Partikel enthalten kann. Dabei kann es sich beispielsweise um Quarz, Staub oder andere Verschmutzungen der Umgebungsluft handeln, wie sie zum Beispiel auf Baustellen auftreten. Der Zweck der vorgeschlagenen Mess-Vorrichtung besteht darin, die Partikel, die in einer gasförmigen Probe enthalten sind, in Bezug auf ihre Zusammensetzung zu analysieren, d.h. die Zusammensetzung zu ermitteln. Damit soll erreicht werden, dass der Nutzer die gesundheitliche Belastung, die von den Partikeln ausgeht, besser einschätzen kann. Dies wird insbesondere dadurch erreicht, dass der Nutzer die Zusammensetzung der Partikel in der Umgebungsluft bzw. seiner Atemluft kennt und sich entsprechend verhalten bzw. reagieren und Maßnahmen ergreifen kann. Es ist im Sinne der Erfindung bevorzugt, dass die gasförmige Probe auch als "Gas- oder Luftprobe" bezeichnet wird.

Bei den Spektren wird vorzugsweise die Strahlungsintensität oder Strahlungsleistung in Abhängigkeit von der Wellenlänge aufgetragen. Da die Wellenlänge bei der Raman-Streuung von der Anregungswellenlänge abhängt, ist es im Sinne der Erfindung bevorzugt, die Wellenlänge in eine Verschiebung umzurechnen, die im Sinne der Erfindung bevorzugt auch als Raman-Shift bezeichnet wird. Dadurch wird vorteilhafterweise ein Vergleich von Spektren erleichtert, die mit unterschiedlichen Anregungswellenlängen aufgenommen werden.

Erfindungsgemäß ist vorgesehen, dass die vorgeschlagene Vorrichtung zumindest die folgenden Komponenten umfasst: eine Vorrichtung zum Ansaugen der gasförmigen Probe, eine Vorrichtung zur Trennung der in der gasförmigen Probe enthaltenen Partikel in Abhängigkeit von einem Durchmesser der Partikel, eine Vorrichtung zum Sammeln der Partikel, eine Sensor-Vorrichtung zur Analyse der in der gasförmigen Probe enthaltenen Partikel und Vorrichtung zur Auswertung von Spektren. Dabei wird die Vorrichtung zum Ansaugen der gasförmigen Probe im Sinne der Erfindung bevorzugt als "Ansaugvorrichtung" bezeichnet, während die Vorrichtung zur Trennung der Partikel vorzugsweise als "Trennvorrichtung" bezeichnet wird. Die Vorrichtung zum Sammeln der Partikel kann auch zum Auffangen der Partikel verwendet werden und wird im Sinne der Erfindung bevorzugt als "Sammelvorrichtung" oder "Auffangvorrichtung" bezeichnet. Die Vorrichtung zur Auswertung der Spektren wird vorzugsweise auch als "Auswertungs-Vorrichtung" bezeichnet.

Ein wesentlicher Vorteil der Erfindung besteht darin, dass die vorgeschlagene Vorrichtung als körpergetragene Mess-Vorrichtung ausgebildet sein kann, die - ähnlich wie ein Strahlungs-Dosimeter- von einem Nutzer mitgeführt bzw. am Körper getragen oder an einem Kleidungsstück befestigt werden kann. Der Erfinder hat erkannt, dass unter Verwendung einer Sensor-Vorrichtung, die basierend auf Raman-Streuung arbeitet, ein handliches, kompaktes Gerät bereitgestellt werden kann, das von einem Nutzer bei der Arbeit, beispielsweise auf einer Baustelle, mitgeführt und als "Staub-Dosimeter" eingesetzt werden kann. In einer alternativen Ausgestaltung der Erfindung kann die Vorrichtung beispielsweise an einer Luftreinigungsvorrichtung angeordnet vorliegen und leitungstechnisch mit der Luftreinigungsvorrichtung verbunden sein. Beispielsweise können zwischen der Vorrichtung und der Luftreinigungsvorrichtung Informationen, Daten und/oder Steuerbefehle ausgetauscht werden, ohne darauf beschränkt zu sein. Die Verbindung kann beispielsweise eine leitungsgebundene Verbindung sein, bei der zum Beispiel über Kabel oder andere Leitungen Daten ausgetauscht werden. Es kann allerdings auch eine drahtlose Kommunikation zwischen der Luftreinigungsvorrichtung und der Vorrichtung vorgesehen sein. Darüber hinaus können Kontakte vorgesehen sein, um eine Kommunikation oder einen Datenaustausch zwischen den Geräten zu ermöglichen. Beispielsweise kann die Umgebungsluft der Luftreinigungsvorrichtung mit der vorgeschlagenen Vorrichtung untersucht werden und ein Einschaltbefehl von der Vorrichtung an die Luftreinigungsvorrichtung gesendet werden, um die Luftreinigungsvorrichtung einzuschalten, wenn eine starke Verunreinigung der Umgebungsluft festgestellt wird. Das Vorliegen einer starken Verunreinigung der Umgebungsluft der Luftreinigungsvorrichtung kann beispielsweise durch das Überschreiten von Grenzwerten, die in der Luftreinigungsvorrichtung und/oder in der Vorrichtung hinterlegt sind, festgestellt werden. Die Luftreinigungsvorrichtung kann insbesondere von der vorgeschlagenen Vorrichtung eingeschaltet werden, wenn der Anteil von Quarz in der Umgebungsluft einen vorgegebenen Grenzwert übersteigt. Die Luftreinigungsvorrichtung kann mit Hilfe der vorgeschlagenen Vorrichtung auch ausgeschaltet werden, wenn entsprechende Grenzwerte in Bezug auf die Luftverschmutzung, insbesondere hinsichtlich der Modifikationen des Silizium-Dioxids, unterschritten werden.

Die Sensor-Vorrichtung, die basierend auf Raman-Streuung arbeitet, wird im Sinne der Erfindung bevorzugt als "Raman-Sensor" oder "Raman-Spektrometer" bezeichnet. Insofern betrifft die Erfindung insbesondere eine Mess-Vorrichtung zur Analyse einer gasförmigen Probe, die ein Raman-Spektrometer umfasst.

Die vorgeschlagene Vorrichtung beruht vorzugsweise darauf, dass ein Molekül durch einfallendes, monochromes Licht zu Dipolschwingungen angeregt werden kann, wobei der Dipol auf diese Weise zu einer sekundären Strahlungsquelle wird. Die Dipolschwingung kann durch Resonanzfrequenzen des Moleküls im Kristallgitter moduliert werden, so dass weitere Peaks im Spektrum entstehen, die als Stokes-Linien und Anti-Stokes-Linien bekannt sind. Im Kontext der vorliegenden Erfindung ist die Raman-Streuung durch diese Modulierung gut geeignet, um kristalline Stoffe zu analysieren und zu unterscheiden. Tests haben gezeigt, dass insbesondere die im Kontext dieser Erfindung interessierenden Quarz-Modifikationen besonders gut unter Verwendung der Raman-Streuung erkannt und von anderen Stoffen unterschieden werden können. Darüber hinaus hängt die zu untersuchende Wellenlänge von der Anregung ab. Die Komponenten der vorgeschlagenen Vorrichtung sind vorzugsweise so ausgewählt, dass die im Spektrum zu erwartenden Peaks mit einer erfindungsgemäßen Kombination aus Lichtquelle und Sensor gut aufzufinden sind.

Insbesondere ermöglicht die vorgeschlagene Vorrichtung die Durchführung von Live-Messungen der Staub-Exposition eines Nutzers der Vorrichtung und eine Live-Analyse der Zusammensetzung in der Umgebungsluft enthaltenen Partikel. Der Begriff "Zusammensetzung der Partikel" bedeutet im Sinne der Erfindung bevorzugt, dass die Menge der in einer gasförmigen Probe enthaltenen Partikel auf ihre Zusammensetzung hin untersucht werden kann. Es geht somit vorzugsweise nicht um die stoffliche Zusammensetzung eines einzelnen, größeren Partikels, sondern um die Angabe der Anteile verschiedener Partikelsorten, die die Gesamt-Partikelmenge in der gasförmigen Probe ausmachen. Vorteilhafterweise kann die Erfindung sogar die Anteile der einzelnen Kristallmodifikationen des Silizium-Dioxids, sowie von amorphem Silizium-Dioxid ermitteln und ausgeben. Dies wird insbesondere dadurch ermöglicht, dass die Referenz-Spektren, mit denen die von der Sensor-Vorrichtungen ermittelten Spektren verglichen werden, die verschiedenen, eben genannten Ausgestaltungen von Silizium-Dioxid beschreiben.

Es ist im Sinne der Erfindung bevorzugt, dass die Vorrichtung zum Ansaugen der gasförmigen Probe ein Lüfter oder eine Pumpe ist. Vorzugsweise ist die Ansaugvorrichtung dazu eingerichtet, ein Gasvolumen von 8-10 l/min zu fördern. Tests haben gezeigt, dass mit diesem Luftvolumen pro Zeiteinheit eine optimale Auswertung der Partikel-Zusammensetzung in einer gasförmigen Probe, die die zu analysierenden Partikel enthält, ermöglicht werden kann. Es hat sich insbesondere gezeigt, dass mit der genannten Gas- oder Luftmenge pro Zeiteinheit ausreichend Gas für eine optimale Auswertung der Probe bereitgestellt werden kann. Auf der anderen Seite ist die Gasmenge pro Zeiteinheit auch nicht zu groß, so dass veränderte Sammel- oder Ablagerungseffizienzen bei der Analyse und Auswertung der Partikel-Zusammensetzung berücksichtigt werden müssten. Solche Abweichungen müssen insbesondere dann berücksichtigt werden, wenn verhältnismäßig mehr größere und damit trägere Partikel eingeatmet werden. Dies kann insbesondere bei größeren Gasvolumina der Fall sein.

Es ist im Sinne der Erfindung insbesondere bevorzugt, dass die vorgeschlagene Vorrichtung so an einem Nutzer oder in seiner Umgebung angeordnet vorliegt, dass die gasförmige Probe aus der Atemluft des Nutzers entnommen wird. Der Begriff "Atemluft des Nutzers" beschreibt im Sinne der Erfindung bevorzugt dasjenige Gasvolumen, welches im Bereich der Nase und des Mundes des Nutzers vorliegt und von dem Nutzer durch die Nase oder durch den Mund eingeatmet werden kann. Durch diese Anordnung in räumlicher Nähe zum Gesicht des Nutzers ist eine besonders genaue und realitätsgetreue Analyse der Partikel-Zusammensetzung möglich, weil der Nutzer mit einer sehr hohen Wahrscheinlichkeit Gas aus dem als "Atemluft" bezeichneten Gasvolumen einatmen wird. Beispielsweise kann die Vorrichtung im Brustbereich des Nutzers getragen werden. Dazu kann die Vorrichtung zum Beispiel in eine Brusttasche einer Arbeitshose oder eines Hemdes oder einer Jacke gesteckt werden. Vorzugsweise kann die vorgeschlagene Vorrichtung Befestigungsmittel umfassen, mit denen die Vorrichtung an der Kleidung des Nutzers befestigt werden kann.

Es ist im Sinne der Erfindung bevorzugt, dass die Vorrichtung zur Trennung der Partikel dazu eingerichtet ist, die Partikel nach ihrem aerodynamischen Durchmesser zu trennen. In dieser bevorzugten Ausgestaltung der Erfindung kann die Trennvorrichtung als Massenkraftabscheider ausgebildet sein. Ein Beispiel für einen Massenkraftabscheider ist ein Zyklonabscheider. Durch die Verwendung einer Trennvorrichtung, die die zu analysierenden Partikel nach ihrem aerodynamischen Durchmesser sortieren bzw. detektieren kann, kann mit der Erfindung eine für den Gesundheitsschutz des Nutzers besonders aussagekräftige Analyse der Partikel-Zusammensetzung erhalten werden, weil sich das Gefährdungspotentials eines Stoffs bzw. eines Partikel-Materials insbesondere aus seinem aerodynamischen Durchmesser ergibt.

Massenkraftabscheider sind vorzugsweise dadurch gekennzeichnet, dass Partikel, die in der zu reinigenden oder in der zu untersuchenden Luft enthalten sind, aufgrund ihrer Trägheit einer starken Richtungsänderung oder einer starken Änderung einer Strömungsgeschwindigkeit, die von dem Abscheider erzeugt wird, nicht folgen können. Die Strömungsbewegung kann beispielsweise von einer Rotation in einem Zyklon oder einem Knick in einem Strömungspfad hervorgerufen werden. Da die Trägheit der Partikel im Wesentlichen proportional zu ihrer Masse ist und die Strömung auf die Oberfläche der Partikel wirkt, kommt es zu einer Trennung der Partikel nach ihrem aerodynamischen Durchmesser.

Es kann in einer alternativen Ausgestaltung der Erfindung auch bevorzugt sein, dass die Vorrichtung zur Trennung der Partikel dazu eingerichtet ist, die Partikel nach ihrem geometrischen Durchmesser zu trennen. In dieser bevorzugten Ausgestaltung der Erfindung kann die Trennvorrichtung als Filter ausgebildet sein. Mit der Vorsehung einer als Filter ausgebildeten Trennvorrichtung kann insbesondere eine kostengünstige Vorrichtung bereitgestellt werden, die sich insbesondere zum großflächigen Einsatz bei vielen Nutzem anbietet. Beispielsweise können solche Vorrichtungen mit Trennvorrichtungen, die die zu analysierenden Partikel nach ihrem geometrischen Durchmesser unterscheiden, zum Einsatz kommen, wenn im Wesentlichen alle Arbeiter auf einer Großbaustelle, wie bei Flughäfen, Bürogebäuden oder Fußballstadien, mit einer vorgeschlagenen Vorrichtung ausgestattet werden.

Es ist im Sinne der Erfindung bevorzugt, dass die Vorrichtung zum Sammeln der Partikel als Filter ausgebildet ist. Vorzugsweise lagern sich die in der gasförmigen Probe enthaltenen Partikel auf der Sammel- bzw. Auffangvorrichtung ab, so dass die Partikel bzw. ihre Zusammensetzung anschließend von der Sensor-Vorrichtung ausgewertet und/oder analysiert werden können. Beispielsweise können sich die zu analysierenden Partikel auf einer Oberfläche oder im Inneren der Sammel-Vorrichtung ablagern. Es ist im Sinne der Erfindung bevorzugt, dass der Filter bzw. das Filtermaterial eine Porengröße aufweist, die klein genug gewählt ist, um keine für die Untersuchung relevanten Partikel zu verlieren. Andererseits wird die Filterfläche im Kontext der Erfindung so ausreichend groß ausgewählt, dass die Pumpe einen ausreichend großen Volumenstrom erbringen kann. Die Porengröße kann beispielsweise korrespondierend zu der Auflösung des Bildsensors ausgewählt werden. Für die Durchführung der Spektrometrie wird das Filtermaterial vorzugsweise so ausgewählt, dass eine möglichst homogene Oberfläche gebildet wird. Die Oberfläche weist vorzugsweise keine Resonanzen in dem für die Quarz-Modifikationen relevanten Bereich auf, um die Messungen nicht zu beeinträchtigen. Als Filtermaterial kann beispielsweise Zellulosenitrat verwendet werden.

Es ist im Sinne der Erfindung bevorzugt, dass die Sensor-Vorrichtung zur Analyse der Partikel oberhalb oder unterhalb der Vorrichtung zum Sammeln der Partikel angeordnet ist. Mit anderen Worten kann die Sensor-Vorrichtung oberhalb oder unterhalb der Sammel- bzw. Auffangvorrichtung innerhalb der vorgeschlagenen Mess-Vorrichtung angeordnet vorliegen. Die Anordnung der Sensor-Vorrichtung wird insbesondere so ausgewählt, dass eine scharfe, optische Abbildung einer Oberfläche der Sammel- bzw. Auffangvorrichtung ermöglicht wird. Dadurch können die Filter-Oberfläche bzw. ihre Belegung mit verschiedenen Partikeln mit optischen Methoden analysiert bzw. untersucht werden.

Es ist im Sinne der Erfindung bevorzugt, dass die Sensor-Vorrichtung zur Analyse der Partikel in einem Abstand d zu der Vorrichtung zum Sammeln der Partikel angeordnet ist, wobei der Abstand d in einem Bereich von 1 bis 50 mm, bevorzugt in einem Bereich von 2 bis 20 mm liegt. Tests haben gezeigt, dass durch die bevorzugt beabstandete Anordnung von Sensor-Vorrichtung zu Sammel- bzw. Auffangvorrichtung einerseits eine Ablagerung von Partikeln aus der Gasprobe auf der der Auffangvorrichtung erlaubt wird. Darüber hinaus hat sich gezeigt, dass die genannten Abstände d in einem Bereich von 0,2 bis 2 cm eine besonders scharfe, optische Abbildung der Oberfläche der Auffangvorrichtung ermöglichen, was sich positiv auf die Auswertungs- bzw. Analyse-Qualität der Partikel-Zusammensetzung in der gasförmigen Probe auswirken kann.

Es ist im Sinne der Erfindung bevorzugt, dass die Referenz-Spektren, mit denen die mit der Sensor-Vorrichtung aufgenommenen Spektren verglichen werden, verschiedene Ausgestaltungen von Silizium-Dioxid beschreiben. Bei den verschiedenen Ausgestaltungen des Silizium-Dioxids handelt es sich vorzugsweise insbesondere um die verschiedenen Kristallmodifikationen des Silizium-Dioxids, wie Quarz, Cristobalit oder Tridymit, sowie um die Daseins-Form des Silizium-Dioxid als amorphes Silizium-Dioxid. Es ist im Sinne der Erfindung ganz besonders bevorzugt, dass mit der vorgeschlagenen Erfindung insbesondere ein Gehalt von Quarz-Feinstaub in einer gasförmigen Probe ermittelt werden kann. Dies ist insbesondere deshalb relevant, weil die Silizium-Dioxid-Kristallmodifikation "Quarz" als besonders gesundheitsgefährdend eingestuft wird. Um den Gehalt von Quarz-Feinstaub in der Atemluft eines Nutzers zu ermitteln, können insbesondere solche Referenz-Spektren zum Vergleich mit den von der Sensor-Vorrichtung ermittelten Spektren verwendet werden, die das optische Verhalten von Quarz beschreiben. Die Auswertung der Spektren, die von der Sensor-Vorrichtung aufgenommen werden, kann beispielsweise darin bestehen, dass die aufgenommenen Spektren mit Silizium-Dioxid-Referenz-Spektren verglichen werden. Beispielsweise können Korrelationen zwischen den Spektren untersucht oder die Lage und Position von Peaks in den Spektren bestimmt und/oder verglichen werden. Es kann im Sinne der Erfindung darüber hinaus bevorzugt sein, dass Verfahren des Maschinenlernens verwendet werden, um die von der Sensor-Vorrichtung ermittelten Spektren mit möglichen Referenz-Spektren zu vergleichen. Vorzugsweise können die Referenz-Spektren nicht nur Silizium-Dioxid und seine unterschiedlichen Daseins-Formen beschreiben, sondern auch andere Stoffe oder Materialien, die als Partikel in Gasproben bzw. in der Atemluft eines Nutzers vorkommen können.

In einem zweiten Aspekt betrifft die Erfindung ein Verfahren zur Analyse einer gasförmigen Probe in Bezug auf eine Zusammensetzung der in der Probe enthaltenen Partikel, wobei das Verfahren durch folgende Verfahrensschritte gekennzeichnet ist:
a) Ansaugen der gasförmigen Probe mit einer Vorrichtung zum Ansaugen,
b) Trennen der in der gasförmigen Probe enthaltenen Partikel in Abhängigkeit von einem Durchmesser der Partikel mit einer Vorrichtung zum Trennen der Partikel,
c) Sammeln der Partikel mit einer Vorrichtung zum Sammeln der Partikel,
d) Analyse der in der gasförmigen Probe enthaltenen Partikel in Abhängigkeit von dem Durchmesser der Partikel mit einer Sensor-Vorrichtung, wobei die Sensor-Vorrichtung basierend auf Raman-Streuung arbeitet,
e) Erzeugung von Spektren durch die Sensor-Vorrichtung,
f) Auswertung der Spektren, indem die Spektren von einer Vorrichtung zur Auswertung mit Referenz-Spektren verglichen werden.

Das Sammeln der Partikel kann im Sinne der Erfindung bevorzugt auch als Auffangen bezeichnet werden. Es erfolgt insbesondere mit einer Sammel- oder Auffangvorrichtung. Die für die vorgeschlagene Mess-Vorrichtung beschriebenen Definitionen, technischen Wirkungen und Vorteile gelten für das vorgeschlagene Analyse-Verfahren analog.

Es ist im Sinne der Erfindung bevorzugt, dass die Verfahrensschritte mit Vorrichtungen durchgeführt werden, die Bestandteile einer Mess-Vorrichtung sind. Dabei kann es sich insbesondere um eine vorgeschlagene Vorrichtung gemäß der vorliegenden Erfindung handeln. Mit anderen Worten kann das vorgeschlagene Analyse-Verfahren mit einer Vorrichtung gemäß der vorliegenden Erfindung durchgeführt werden. Es kann im Sinne der Erfindung aber auch bevorzugt sein, dass das Verfahren mit einer anderen Vorrichtung durchgeführt wird oder dass die Vorrichtungen, die zur Durchführung des Verfahrens erforderlich sind, zusammen keine gemeinsame Vorrichtung bilden.

Es ist im Sinne der Erfindung bevorzugt, dass der Vergleich zwischen den Spektren und den Referenz-Spektren durch Korrelation, Maschinenlernen oder eine Peak-Suche erfolgt.

Bei der vorliegenden Erfindung kommt eine Sensor-Vorrichtung zum Einsatz, die basierend auf der Raman-Streuung arbeitet ("Raman-Spektrometer"). Dieses Raman-Spektrometer stellt einen dritten Aspekt der vorliegenden Erfindung dar. Bei konventionellen Spektrometrie-Verfahren werden häufig eine breitbandige Anregung und Lücken im zurückgestrahlten Licht ausgenutzt, um Resonanzfrequenzen von Stoffen und Material zu identifizieren. Die Resonanzen der Silizium-Dioxid-Daseins-Formen liegen allerdings bei sehr großen Wellenlängen, d.h. in einem Bereich von 15-25 µm, so dass es eine technische Herausforderung darstellt, sie anzuregen und/ oder zu erfassen. Der Erfinder hat daher erkannt, dass mit Raman-Streuung eine Anregung im Resonanzbereich des Silizium-Dioxids mit beliebiger Wellenlänge möglich ist. Durch die Verwendung von Raman-Streuung kann die technische Realisierung der vorgeschlagenen Vorrichtung und des vorgeschlagenen Verfahrens somit vorteilhafterweise stark vereinfacht werden. Im Kontext der vorliegenden Erfindung findet eine Beleuchtung insbesondere mit im Wesentlichen monochromatischen Licht statt, wobei eine hohe Auflösung und eine höhe Genauigkeit bei Wellenlänge und Intensität angestrebt werden.

Die Sensor-Vorrichtung der vorgeschlagenen Erfindung kann vorzugsweise als Spektrometer bezeichnet werden. Der Spektrometer-Aufbau kann vorzugsweise eine Beleuchtungs-Einrichtung, einen Filter, einen Spalt, ein dispersives Element, eine abbildende Optik und/oder einen optischen Sensor umfassen. Der optische Sensor kann im Sinne der Erfindung bevorzugt auch als Bild-Sensor bezeichnet werden. Bei dem Filter kann es sich vorzugsweise um einen Kerb- oder Notch-Filter handeln, mit dem Frequenzen innerhalb eines engen Frequenzbereiches aus einem Spektrum herausgefiltert werden können. Der Kerb- oder Notch-Filter kann vorzugsweise ein optischer Kerb- oder Notch-Filter sein. Darüber hinaus können zwischen der Beleuchtungs-Einrichtung und dem Spalt ein Bandpass-Filter zur Reduzierung einer Bandbreite der Anregung und ein Partikelfilter vorgesehen sein.

Es ist im Sinne der Erfindung bevorzugt, dass sich die Partikel aus der Gasprobe auf der Auffang-Vorrichtung abscheiden. Die Partikel, die sich auf der Oberfläche der Auffang-Vorrichtung abgelagert haben, werden mit der Beleuchtungs-Einrichtung beleuchtet, um die Partikel anzuregen. Es ist im Sinne der Erfindung bevorzugt, dass die Beleuchtung bzw. die Anregung der Partikel auf der Oberfläche der Auffang-Vorrichtung eine möglichst geringe Bandbreite aufweist. Die Bandbreite liegt vorzugsweise in einem Bereich von 1 nm oder weniger. Gleichzeitig ist die Beleuchtungs-Einrichtung vorzugsweise dazu eingerichtet, sehr hohe Lichtströme bereitzustellen. Außerdem ist die Beleuchtungs-Einrichtung dazu eingerichtet, eine besonders homogene und gleichmäßige Beleuchtung bzw. Anregung der Partikel auf der Oberfläche der Auffang-Vorrichtung, d.h. des zu vermessenden Filter-Bereichs, zu gewährleisten. Beispielsweise kann die Beleuchtungs-Einrichtung Hochleistungs-Leuchtdioden (LED) umfassen oder als Linienlaser ausgebildet sein. Die Dioden können beispielsweise eine Strahlungsleistung 5 bis 10 W aufweisen. Typische Belichtungszeiten können in einem Bereich von einigen Sekunden liegen.

Es ist im Sinne der Erfindung insbesondere bevorzugt, Hochleistungs-Leuchtdioden als Beleuchtungs-Einrichtung zu verwenden, wobei diesen Hochleistungs-Leuchtdioden ein Bandpass-Filter nachgeschaltet werden kann, um eine möglichst geringe Bandbreite der Anregung zu erhalten.

Es ist im Sinne der Erfindung bevorzugt, dass anschließend ein Filter verwendet werden kann, um die Anregungsstrahlung aus der zurückgestrahlten oder aus der durchgelassenen Strahlung herauszufiltern. Dazu kann vorzugsweise ein Notch-Filter verwendet werden. Es ist im Sinne der Erfindung insbesondere bevorzugt, dass mit dem Filter unerwünschte Rayleigh- und Tyndall-Strahlung aus dem Spektrum herausgefiltert wird, wobei die Rayleigh- und Tyndall-Strahlung vor allem deswegen unerwünscht ist, weil ihre üblicherweise hohe Intensität den optischen Sensor übersteuern und eine Auswertung der gewünschten Raman-Strahlung verhindern kann. Die Verwendung eines Notch-Filters hat sich als vorteilhaft herausgestellt, weil damit insbesondere die elastische gestreute Rayleigh- und Tyndall-Strahlung aus dem Spektrum herausgefiltert werden kann, während die nicht-elastisch gestreute Raman-Strahlung durchgelassen wird. Die Verwendung eines solchen Filters ist aber optional. Stattdessen kann auch ausgenutzt werden, dass es sich bei der Rayleigh- und Tyndall-Strahlung um gerichtete Strahlungen handelt, während Raman-Strahlung ungerichtet ist. Es ist im Sinne der Erfindung bevorzugt, dass die unerwünschte Rayleigh- und Tyndall-Strahlung auch durch eine geschickte Anordnung der optischen Komponenten des vorgeschlagenen Raman-Spektrometers eliminiert werden kann. Dazu können der Spalt, das dispersive Element, die abbildende Optik und/oder der optische Sensor abgewinkelt von der optischen Achse der Beleuchtungs-Einrichtung angeordnet sein. Es ist im Sinne der Erfindung bevorzugt, dass der Kerb- oder Notch-Filter im Strahlengang hinter dem angestrahlten Filter angeordnet ist. Der Kerb- oder Notch-Filter kann aber auch vor der Optik oder vor dem Bildsensor angeordnet vorliegen.

Es ist im Sinne der Erfindung bevorzugt, dass der Spalt dazu eingerichtet ist, den Bereich des Filters zu begrenzen, der von der folgenden Optik erfasst wird. Seine Breite ist vorzugsweise so gewählt, dass unerwünschte Beugungseffekte vermieden werden, die auftreten können, wenn der Spalt zu schmal ausgebildet ist. Die Breite des Spalts ist vorzugsweise auf die gewünschte Auflösung ausgelegt, wobei sich ein zu groß gewählter Spalt nachteilig auf die spektrale Auflösung auswirken kann. Die Breite des Spalts stellt vorzugsweise einen Kompromiss zwischen einer zu großen und einer zu kleinen Spaltbreite dar. Es ist im Sinne der Erfindung bevorzugt, dass die Spaltbreite in Abhängigkeit von der Auflösung und/oder der Bandbreite des Spektrometers ausgewählt wird. Die Spaltbreite kann beispielsweise im Bereich von 200 µm liegen. Selbstverständlich sind aber auch andere Werte für die Spaltbreite möglich.

Es ist im Sinne der Erfindung bevorzugt, dass das dispersive Element als Beugungsgitter ausgebildet ist. Das dispersive Element ist vorzugsweise dazu eingerichtet, das vom Filter zurückgestrahlte Licht in Abhängigkeit von seiner Wellenlänge aufzuspalten. Dadurch können die für Auswertung der für den Gesundheitsschutz relevanten Wellenlängenbereiche identifiziert werden können. Dabei handelt es sich bevorzugt um diejenigen Wellenlängen bzw. Wellenlängenbereiche, die die verschiedenen Daseins-Formen des Silizium-Dioxids betreffen. Das Beugungsgitter kann beispielsweise als transmissives Blaze-Gitter ausgebildet sein. Durch die Verwendung eines solchen Blaze-Gitters kann ein besonders kompakter Aufbau der vorgeschlagenen Mess-Vorrichtung bzw. des Spektrometers erreicht werden, da die Bestandteile der Vorrichtung in einer Linie angeordnet sein können. Es können alternativ aber auch Prismen oder reflektive Beugungsgitter als dispersive Elemente innerhalb der vorgeschlagenen Sensor-Vorrichtung verwendet werden. Es ist im Sinne der Erfindung besonders bevorzugt, dass die Dispersion in einem im Wesentlichen rechten Winkel zum Spalt erfolgt, weil dadurch die Sensor-Fläche optimal ausgenutzt werden kann.

Hinter dem dispersiven Element kann anschließend eine Optik zur Abbildung der Wellenlängenbereiche auf den optischen Sensor vorgesehen sein. Diese Optik wird im Sinne der Erfindung bevorzugt auch als abbildende Optik bezeichnet. Die abbildende Optik ist vorzugsweise so ausgewählt, dass sie eine ausreichende Auflösung auch für die kleinstmöglichen Partikel sicherstellt. Die kleinstmöglichen Partikel können beispielsweise Durchmesser in einem Bereich von 0,4 bis 1,0 µm aufweisen.

Der optische Sensor ist vorzugsweise dazu eingerichtet, die abgebildeten Spektren aufzuzeichnen. Er ist vorzugsweise so ausgewählt, dass er eine ausreichende Pixel- als auch Intensitätsauflösung für die zu analysierenden Partikel, insbesondere die Silizium-Dioxid-Partikel, und die Raman-Streuung aufweist.

Anschließend können die mit der Sensor-Vorrichtung ermittelten Spektren mit der Vorrichtung zur Auswertung der Spektren ausgewertet und/oder analysiert werden. Dazu werden in den Spektren insbesondere die Elemente bzw. Merkmale identifiziert, die auf Silizium-Dioxid-Partikel in den unterschiedlichen Daseins-Formen des Silizium-Dioxids hinweisen. Insbesondere werden in diesem Verfahrensschritt die Silizium-Dioxid-Spektren erkannt. Obwohl im Kontext der vorliegenden Erfindung die Verwendung einer Auswertungs-Vorrichtung zur informationstechnologieunterstützten Auswertung der Spektren bevorzugt ist, kann die Auswertung der Spektren auch händisch erfolgen.

Die ermittelten Ergebnisse können auf der vorgeschlagenen Vorrichtung angezeigt werden. Dazu kann die Vorrichtung Anzeigemittel, wie ein Display oder einen kleinen Bildschirm umfassen. Auch die Abgabe eines optischen, akustischen oder haptischen Warnhinweises an den Nutzer kann im Sinne der Erfindung vorgesehen sein, wenn hohe Partikelzahlen oder ein unerwünschter hoher Anteil beispielsweise von Quarz unter den Partikeln detektiert wird. Mit der Erfindung kann vorteilhafterweise eine im Wesentlichen kontinuierliche Überwachung der Atem- oder Umgebungsluft eines Nutzers ermöglicht werden. Insbesondere kann eine Quarz-Feinstaub-Belastung des Nutzers im Wesentlichen kontinuierlich überwacht werden. Die Erfindung ermöglicht insbesondere eine genaue Information des Nutzers über die ihn umgebende Luft und deren Staub- bzw. Quarzbelastung. Dadurch kann der Nutzer seine Arbeitszeiten entsprechend anpassen, wobei eine Arbeitsunterbrechung "auf Verdacht", weil die Staub- oder Quarz-Exposition vermeintlich zu hoch sei, vorteilhafterweise durch Einsatz der Erfindung vermieden werden kann.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Darstellung des Aufbaus einer bevorzugten Ausführungsform der vorgeschlagenen Vorrichtung
- Fig. 2: schematische Darstellung des Aufbaus einer bevorzugten Ausführungsform der Sensor-Vorrichtung der vorgeschlagenen Vorrichtung

### Ausführungsbeispiele und Figurenbeschreibung:

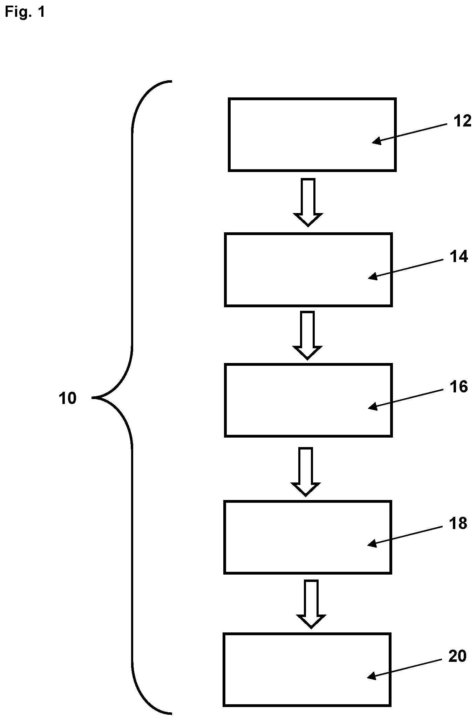

Fig. 1 zeigt eine schematische Darstellung des Aufbaus einer bevorzugten Ausführungsform der vorgeschlagenen Vorrichtung 10. Insbesondere zeigt Fig. 1 die Komponenten der vorgeschlagenen Mess-Vorrichtung 10, nämlich eine Vorrichtung 12 zum Ansaugen der gasförmigen Probe, eine Vorrichtung 14 zur Trennung der in der gasförmigen Probe enthaltenen Partikel in Abhängigkeit von einem Durchmesser der Partikel, eine Vorrichtung 16 zum Sammeln der Partikel, eine Sensor-Vorrichtung 18 zur Analyse der in der gasförmigen Probe enthaltenen Partikel und eine Vorrichtung 20 zur Auswertung von Spektren.

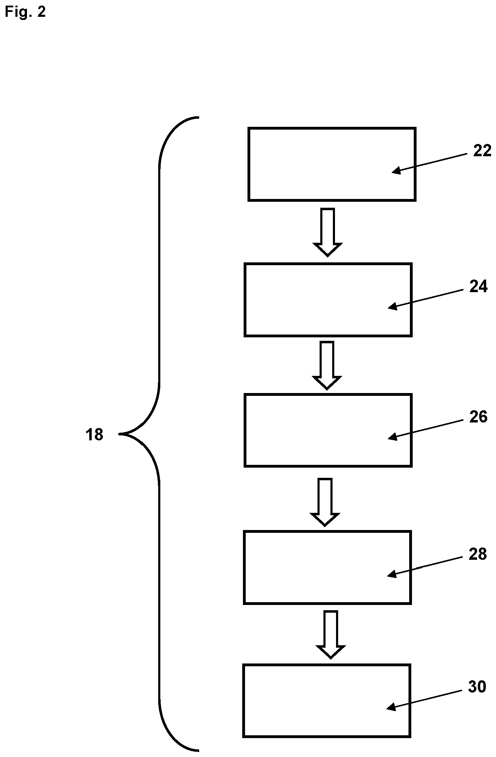

Fig. 2 zeigt eine schematische Darstellung des Aufbaus einer bevorzugten Ausführungsform der Sensor-Vorrichtung 18 der vorgeschlagenen Vorrichtung 10. Insbesondere zeigt Fig. 2 die Komponenten der vorgeschlagenen des vorgeschlagenen Raman-Spektrometers 18, nämlich eine Beleuchtungs-Einrichtung 22, einen Spalt 24, ein dispersives Element 26, eine abbildende Optik 28 und einen optischen Sensor 30. Die Sensor-Vorrichtung 18 kann darüber hinaus einen Filter 32 umfassen (nicht abgebildet), der zwischen der Beleuchtungs-Einrichtung 22 und dem Spalt 24 angeordnet ist. Der Filter 32 kann beispielsweise als Partikelfilter ausgebildet sein. Der Filter 32 kann insbesondere dazu verwendet werden, unerwünschte Bestandteile, wie Rayleigh- und Tyndall-Strahlung, aus der Strahlung herauszufiltern. Darüber hinaus kann hinter der Beleuchtungs-Einrichtung 22 ein Bandpass-Filter (ohne Bezugszeichen) vorgehen sein, um eine möglichst geringe Bandbreite der Beleuchtung sicherzustellen.

### Bezugszeichenliste

- 10: Vorrichtung zur Analyse einer gasförmigen Probe
- 12: Vorrichtung zum Ansaugen der gasförmigen Probe, Ansaugvorrichtung
- 14: Vorrichtung zur Trennung der in der gasförmigen Probe enthaltenen Partikel
- 16: Vorrichtung zum Sammeln der Partikel
- 18: Sensor-Vorrichtung zur Analyse der Partikel, Raman-Spektrometer
- 20: Vorrichtung zur Auswertung der Spektren
- 22: Beleuchtungs-Einrichtung
- 24: Spalt
- 26: dispersives Element
- 28: abbildende Optik
- 30: optischer Sensor
- 32: Filter der Sensor-Vorrichtung

## Patentansprüche

1. Vorrichtung (10) zur Analyse einer gasförmigen Probe in Bezug auf eine Zusammensetzung der in der Probe enthaltenen Partikel
**dadurch gekennzeichnet, dass**
die Vorrichtung (10) folgende Komponenten umfasst:
a) Vorrichtung (12) zum Ansaugen der gasförmigen Probe,
b) Vorrichtung (14) zur Trennung der in der gasförmigen Probe enthaltenen Partikel in Abhängigkeit von einem Durchmesser der Partikel,
c) Vorrichtung (16) zum Sammeln der Partikel,
d) Sensor-Vorrichtung (18) zur Analyse der in der gasförmigen Probe enthaltenen Partikel in Abhängigkeit von dem Durchmesser der Partikel, wobei die Sensor-Vorrichtung (18) basierend auf Raman-Streuung arbeitet und dazu eingerichtet ist, Spektren zu erzeugen,
e) Vorrichtung (20) zur Auswertung der Spektren, indem die Spektren von der Vorrichtung (20) zur Auswertung mit Referenz-Spektren verglichen werden.

2. Vorrichtung (10) nach Anspruch 1
**dadurch gekennzeichnet, dass**
die Vorrichtung (12) zum Ansaugen der gasförmigen Probe ein Lüfter oder eine Pumpe ist.

3. Vorrichtung (10) nach Anspruch 1 oder 2
**dadurch gekennzeichnet, dass**
die Vorrichtung (12) zum Ansaugen der gasförmigen Probe dazu eingerichtet ist, ein Gasvolumen von 8-10 l/min zu fördern.

4. Vorrichtung (10) nach einem der vorhergehenden Ansprüche
**dadurch gekennzeichnet, dass**
die Vorrichtung (14) zur Trennung der Partikel dazu eingerichtet ist, die Partikel nach ihrem aerodynamischen Durchmesser zu trennen, wobei die Vorrichtung (14) zur Trennung der Partikel als Massenkraftabscheider oder als Zyklonabscheider ausgebildet ist.

5. Vorrichtung (10) nach einem der Ansprüche 1 bis 3
**dadurch gekennzeichnet, dass**
die Vorrichtung (14) zur Trennung der Partikel dazu eingerichtet ist, die Partikel nach ihrem geometrischen Durchmesser zu trennen, wobei die Vorrichtung (14) zur Trennung der Partikel als Filter ausgebildet ist.

6. Vorrichtung (10) nach einem der vorhergehenden Ansprüche
**dadurch gekennzeichnet, dass**
die Vorrichtung (16) zum Sammeln der Partikel als Filter ausgebildet ist.

7. Vorrichtung (10) nach einem der vorhergehenden Ansprüche
**dadurch gekennzeichnet, dass**
die Sensor-Vorrichtung (18) zur Analyse der Partikel in einem Abstand d zu der Vorrichtung zum Sammeln der Partikel angeordnet ist, wobei der Abstand d in einem Bereich von 1 bis 50 mm, bevorzugt in einem Bereich von 2 bis 20 mm liegt.

8. Vorrichtung (10) nach einem der vorhergehenden Ansprüche
**dadurch gekennzeichnet, dass**
die Referenz-Spektren verschiedene Ausgestaltungen von Silizium-Dioxid beschreiben.

9. Vorrichtung (10) nach einem der vorhergehenden Ansprüche
**dadurch gekennzeichnet, dass**
die Vorrichtung (10) als körpergetragene Vorrichtung für einen Nutzer ausgebildet ist.

10. Verfahren zur Analyse einer gasförmigen Probe in Bezug auf eine Zusammensetzung der in der Probe enthaltenen Partikel, wobei das Verfahren durch folgende **Verfahrensschritte gekennzeichnet** ist:
a) Ansaugen der gasförmigen Probe mit einer Vorrichtung zum Ansaugen (12),
b) Trennen der in der gasförmigen Probe enthaltenen Partikel in Abhängigkeit von einem Durchmesser der Partikel mit einer Vorrichtung (14) zum Trennen der Partikel,
c) Sammeln der Partikel mit einer Vorrichtung (16) zum Sammeln der Partikel,
d) Analyse der in der gasförmigen Probe enthaltenen Partikel in Abhängigkeit von dem Durchmesser der Partikel mit einer Sensor-Vorrichtung (18), wobei die Sensor-Vorrichtung (18) basierend auf Raman-Streuung arbeitet,
e) Erzeugung von Spektren durch die Sensor-Vorrichtung (18),
f) Auswertung der Spektren, indem die Spektren von einer Vorrichtung (20) zur Auswertung mit Referenz-Spektren verglichen werden.

11. Verfahren nach Anspruch 10
**dadurch gekennzeichnet, dass**
der Vergleich zwischen den Spektren und den Referenz-Spektren durch Korrelation, Maschinenlernen oder eine Peak-Suche erfolgt.

12. Sensor-Vorrichtung (18) zur Analyse einer gasförmigen Probe in Bezug auf eine Zusammensetzung der in der Probe enthaltenen Partikel
**dadurch gekennzeichnet, dass**
die Sensor-Vorrichtung (18) eine Beleuchtungs-Einrichtung (22), einen Spalt (24), ein dispersives Element (26), eine abbildende Optik (28) und/oder einen optischen Sensor (30) umfasst.

13. Sensor-Vorrichtung (18) nach Anspruch 12
**dadurch gekennzeichnet, dass**
die Beleuchtungs-Einrichtung (22) eine Bandbreite in einem Bereich von 1 nm oder weniger bei gleichzeitig hohen Lichtströmen und homogener Beleuchtung aufweist.

14. Sensor-Vorrichtung (18) nach Anspruch 12 oder 13
**dadurch gekennzeichnet, dass**
die Sensor-Vorrichtung (18) einen Filter (32) umfasst, wobei der Filter (32) als Notch-Filter ausgebildet ist.
